# EUROPÄISCHE PATENTSCHRIFT

(11) **EP 1 910 866 B1**
(45) Veröffentlichungstag und Bekanntmachung des Hinweises auf die Patenterteilung: **07.09.2011**
(21) Anmeldenummer: 06754387.6
(22) Anmeldetag: 16.06.2006
(51) Int. Cl.: G01S 15/93

(54) **VERFAHREN ZUR ERMITTLUNG DER TIEFENBEGRENZUNG EINER PARKLÜCKE MITTELS ULTRASCHALLSENSOREN UND SYSTEM HIERZU**
METHOD FOR DETERMINING THE DEPTH OF A PARKING SPACE USING ULTRASONIC SENSORS AND ASSOCIATED SYSTEM
PROCEDE POUR DETERMINER UNE LIMITATION EN PROFONDEUR D'UN CRENEAU DE STATIONNEMENT AU MOYEN DE CAPTEURS A ULTRASONS ET SYSTEME ASSOCIE

(30) Priorität: 02.08.2005 DE 102005038524
(43) Veröffentlichungstag der Anmeldung: 16.04.2008
(73) Patentinhaber: Valeo Schalter und Sensoren GmbH, 74321 Bietigheim-Bissingen (DE)
(72) Erfinder: BARTH, Harald, 70825 Korntal-Münchingen (DE); JECKER, Nicolas, 73728 Esslingen (DE)
(74) Vertreter: Pothmann, Karsten
(86) Internationale Anmeldenummer: PCT/EP2006/005770
(87) Internationale Veröffentlichungsnummer: WO 2007/014595

(56) Entgegenhaltungen:
- EP-A- 1 296 159
- EP-A- 1 643 271
- DE-A1- 10 325 709
- DE-A1- 10 339 645

## Beschreibung

Die Erfindung betrifft ein Verfahren zur Ermittlung der Tiefenbegrenzung einer Parklücke mittels Ultraschallsensoren eines Fahrzeugs. Die Ermittlung der Tiefenbegrenzung einer Parklücke ist erforderlich, um festzustellen, ob in der Parklücke Gegenstände vorhanden sind, die beim Einparkvorgang zu einer Kollision führen würden. Ferner wird zur Bestimmung der Tiefe einer Parklücke in der Regel der Randstein von den Ultraschallsensoren detektiert und als Referenzlinie herangezogen. Beim Einparken des Fahrzeugs in die Parklücke kann der Fall auftreten, dass das Fahrzeugheck und/oder auch der Fahrzeugbug über den Bordstein ragt. Dies ist in der Regel unproblematisch, da ein Bordstein regelmäßig eine Höhe hat, die zu keiner Kollision mit dem Fahrzeugüberhang führt. Ist anstelle des Bordsteins nun aber ein höheres Objekt, wie beispielsweise eine Wand vorhanden, das zu einer Tiefenbegrenzung der Parklücke führt, kann es zu einer Kollision beim Einparkvorgang beziehungsweise zum Abbruch des Einparkvorganges kommen.

Aus dem Stand der Technik sind Systeme bekannt, mit denen die Höhe von zu einer Tiefenbegrenzung führenden Objekten detektiert werden können. So ist beispielsweise aus der DE 101 46 712 A1 bekannt, zwei Sensoren 90° zueinander verdreht anzuordnen. Ein Sensor dient dabei zur Höhenerkennung von Gegenständen und der andere Sensor dient zur Abtastung in vertikaler Richtung. Ferner sind aus dem Stand der Technik Sensoren bekannt, die mechanisch verstellt werden können, um die Höhe von Gegenständen zu bestimmen (EP 0 904 552 A1).

Aus der DE 103 39 645 A1 ist vorbekannt, eventuell auftretende Bodenechos mittels zwei Ultraschallsensoren mit unterschiedlichen Empfindlichkeiten zu unterdrücken.

Aus der EP 1 296 159 A1 ist es bekannt, aus dem empfangenen Signal neben einem gemessenen Entfernungswert auch die Amplitude des Signal zu bestimmen. Dabei kann die Größe der Amplitude dann bestimmt werden, wenn eine erste Ableitung der Hüllkurve einen vorgegebenen Schwellwert unterschreitet, nach dem sie diesen Schwellwert zuvor überschritten hatte.

Aus dem nicht vorveröffentlichten Stand der Technik EP 1 643 271 A1 ist bekannt, die Amplitude des Echoimpulses mit einem vorgebbaren Schwellwert zu vergleichen.

Die bekannten Systeme und Verfahren haben den Nachteil, dass sie vergleichsweise aufwändig sind. Entweder sind mehrere Sensoren vorhanden, was mit zusätzlichen Kosten verbunden ist, oder ein mechanisches System zum Verschwenken der Sensoren wird benötigt.

Der vorliegenden Erfindung liegt die Aufgabe zugrunde; ein Verfahren zur Ermittlung der Tiefenbegrenzung einer Parklücke mittels Ultraschallsensoren eines Fahrzeugs bereitzustellen, das auf einfache Art und Weise eine zuverlässige Aussage bereitstellt. Insbesondere soll die Tiefenbegrenzung, die zu einer Kollision des Fahrzeugs wegen des Überragens des Fahrzeughecks und/oder des Fahrzeugbugs über den Bordstein beim Einparkvorgang führen kann, erkannt werden.

Diese Aufgabe wird durch ein erfindungsgemäßes Verfahren laut Anspruch 1 gelöst.

Aufgrund des Vergleichs der Streubreite aller Echosignale und/oder mehrerer, insbesondere eine Signalkonzentration bildender Echosignale, kann eine Aussage getroffen werden, ob ein Objekt die Tiefe der Parklücke begrenzt. Wird beispielsweise die Parklücke von einer Wand begrenzt, so kann zum einen der Fall auftreten, dass sämtliche Echosignale an der Wand reflektiert werden, weshalb dann die Streubreite sämtlicher Signale sehr klein ist und unterhalb des Schwellwertes liegt. Zum anderen ist denkbar, dass die ausgesendete Ultraschalwelle nicht nur an der Wand, sondern auch an dem vor der Wand liegenden Straßenbelag oder einer Fahrbahnmarkierung reflektiert wird. Erstreckt sich beispielsweise die Fahrbahnmarkierung in Längsrichtung dann ergibt sich bei Betrachtung aller Echosignale insgesamt eine breitere Streubreite. Wird allerdings die Verteilung der Echosignale innerhalb der Streuung betrachtet, dann ist aufgrund von mehreren an der Wand reflektierten Echosignalen innerhalb der Streuung eine Signalkonzentration festzustellen, deren Streubreite unterhalb des Schwellwertes liegt. Somit kann auch in diesem Fall eine Tiefenbegrenzung der Parklücke erkannt werden.

Das erfindungsgemäße Verfahren hat dabei den Vorteil, dass es zum einen mit lediglich einem Sensor auskommen kann und zum anderen keine Mechanik zur Beurteilung der Tiefenbegrenzung einer Parklücke benötigt.

Gemäß der Erfindung ist es möglich, dass die Streuung der Echosignale und deren Verteilung im Hinblick auf die Laufzeiten der Echosignale und/oder im Hinblick auf die räumlichen Abstände der die Echosignale reflektierenden Objekte betrachtet werden kann. Dabei können die räumlichen Abstände zum Sensor bzw. zum Fahrzug insbesondere durch Laufzeitmessungen der aus den ausgesendeten Ultraschallwellen resultierenden und gesammelten Echosignale bestimmt werden.

Der Schwellwert, gemäß dem sich eine Tiefenbegrenzung ergibt, kann im Hinblick auf die Laufzeitbetrachtung 4 msec und insbesondere 3,2 msec und insbesondere unter 2 msec betragen. Ein Laufzeitversatz der Echosignale von 64 µsec entspricht, unter normalen Bedingungen, in etwa einem räumlichen Abstand des Objekts zum Fahrzeug von cirka 1 cm. Ein zeitlicher Versatz der Echosignale unter 4 msec entsprechen dann einem räumlichen Abstand von cirka 62,5 cm; 3,2 msec entsprechen cirka 50 cm und 2 msec entsprechen cirka 31,25 cm. Bei Betrachtung der räumlichen Abstände kann eine Tiefenbegrenzung dann vorliegen, wenn die Streubreite von mehreren oder allen räumlichen Abstände unter 65 cm und insbesondere unter 50 cm und insbesondere unter 30 cm liegt. Bei praktischen Versuchen hat sich ein Schwellwert von cirka 50 cm als vorteilhaft herausgestellt.

Gemäß der Erfindung ist vorteilhaft, wenn in einem Messfenster, in dem eine Ultraschallwelle ausgesendet wird, 3-mal bis 20-mal und insbesondere 4-mal bis 8-mal Echosignale der ausgesendeten Ultraschallwelle gesammelt werden. Über die 4-mal bis 8-mal gesammelten Echosignalen kann dann gemäß der Erfindung die Streubreite der Laufzeiten der Echosignale und/oder der räumlichen Abstände der die Echosignale hervorrufenden Objekte bestimmt werden. Liegen insbesondere die zuletzt empfangenen Echosignale in einer geringen Streubreite, ist davon auszugehen, dass eine störende Tiefenbegrenzung vorliegt.

Ferner ist erfindungsgemäß vorteilhaft, wenn die einzelnen Schritte gemäß Anspruch 1 beim Passieren der Parklücke über die gesamte Parklückenlänge oder über einen Abschnitt der Parklückenlänge durchgeführt werden. Damit kann die Tiefenbegrenzung über eine entsprechende Länge der Parklücke bestimmt werden.

Gemäß einer weiteren, vorteilhaften Ausgestaltung der Erfindung werden die Ultraschallwellen im Wesentlichen kegelartig ausgesandt und zwar mit einem Kegelachswinkel von 10° bis 30°, insbesondere von etwa 20°. Der Öffnungswinkel des Kegels beträgt dann den doppelten Wert wie der Kegelachswinkel. Aufgrund der kegelartigen Aussendung der Signale ergeben sich selbst dann zeitlich versetzte Echosignale, wenn die Ultraschallwelle auf eine ebene, parallel zur Längsachse der Parklücke vorhandene, die Parklücke begrenzende Mauer trifft.

Die Erfindung betrifft außerdem ein System zur Bestimmung der Tiefenbegrenzung einer Parklücke, das nach dem erfindungsgemäßen Verfahren arbeitet und wenigstens einen Ultraschallsensor und eine zugehörige Signalverarbeitung zur Bestimmung der Streubreite der Laufzeiten der Echosignale und/oder der Streubreite der räumlichen Abstände der der Echosignale hervorrufenden Objekte umfasst.

Weitere Einzelheiten und vorteilhafte Ausgestaltungen der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: die Rückansicht eines eine Parklücke passierenden Fahrzeuges;
- Figur 2: die Draufsicht auf das Fahrzeug gemäß Figur 1 mit schematisch angedeuteten Echosignalen;
- Figur 3: eine der Figur 1 entsprechende Ansicht mit einer die Parklücke begrenzenden Wand; und
- Figur 4: die Draufsicht auf Figur 3 mit schematisch angedeuteten Echosignalen.

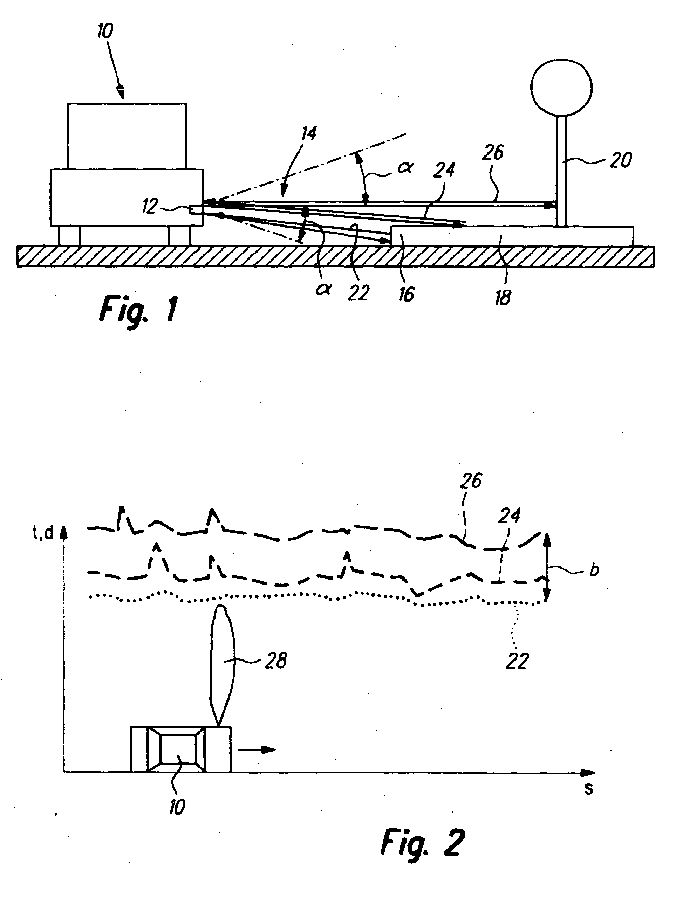

In der Figur 1 ist ein Fahrzeug 10 dargestellt, das einen seitlich angeordneten Ultraschallsensor 12 umfasst. Seitlich neben dem Fahrzeug ist eine Parklücke 14 vorhanden, die durch einen Randstein 16 begrenzt wird. An den Randstein 16 schließt sich ein Gehweg 18 an, auf dem ein Gegenstand 20 vorhanden ist.

Mit dem Ultraschallsensor 12 wird eine kegelartig ausgebildete Ultraschallwelle ausgesendet, die einen Kegelachswinkel α von cirka 20° aufweist. In einem Messfenster wird eine Ultraschallwelle ausgesendet, deren Echosignale 4-mal bis 8-mal gesammelt werden. In der Figur 1 sind beispielhaft drei Echosignale 22, 24 und 26 dargestellt, die aus einer ausgesendeten Ultraschallwelle resultieren. Das erste Echosignal 22 wird am Randstein 16 reflektiert. Das zweite Echosignal 24 wird auf dem Gehweg 18 reflektiert und das dritte Echosignal 26 am Gegenstand 20.

In der Figur 2 sind die Laufzeiten t der empfangenen Echosignale 22, 24, 26 über die vom Fahrzeug 10 zurückgelegte Strecke s aufgetragen. Anstelle der Laufzeiten t ist es ebenfalls erfindungsgemäß denkbar, die von der Laufzeit linear abhängigen Abstände d der Objekte, an denen die Echosignale 22, 24, 26 reflektiert werden, über der vom Fahrzeug zurückgelegten Strecke s darzustellen. In der Figur 2 ist ferner der Erfassungsbereich 28 des Ultraschallsensors 12 angedeutet.

Wie aus der Figur 2 deutlich wird, ist die Streubreite b des zeitlichen Versatzes der gesammelten Echosignale 22, 24, 26 vergleichsweise groß. Eine zu erkennende Tiefenbegrenzung der Parklücke 14 liegt dann vor, wenn die Streubreite b unter einem vorgebbaren Schwellwert W liegt. In der Praxis hat sich gezeigt, dass dann von einer Tiefenbegrenzung der Parklücke 14 auszugehen ist, wenn der Schwellwert W etwa 3,2 msec beträgt. Bei einer Auswertung der Echosignale im Hinblick auf die Abstände der räumlichen Objekte ergibt sich dann eine Tiefenbegrenzung, wenn die Streubreite b der räumlichen Abstände der die Echosignale hervorrufenden Objekte kleiner gleich 50 cm ist.

Bei der in der Figur 1 und 2 wiedergegebenen Situation ist die Streubreite b im Hinblick auf den zeitlichen Versatz der Echosignale größer 3,2 msec und im Hinblick auf die Abstände der Objekte größer 50 cm. Insofern kann aufgrund der Streubreitenbestimmung ermittelt werden, dass keine zu einer Kollision führenden Tiefenbegrenzung der Parklücke 14 vorliegt, wenn das Heck oder der Bug beim Einparken über den Bordstein ragen sollte.

Gemäß der Figur 2 wird die Streubreite b über die gesamte Parklückenlänge betrachtet. Da die Streubreite b über die gesamte Parklückenlänge im Wesentlichen gleich ist, ist davon auszugehen, dass über die Länge der Parklücke keine Tiefenbegrenzung vorhanden ist.

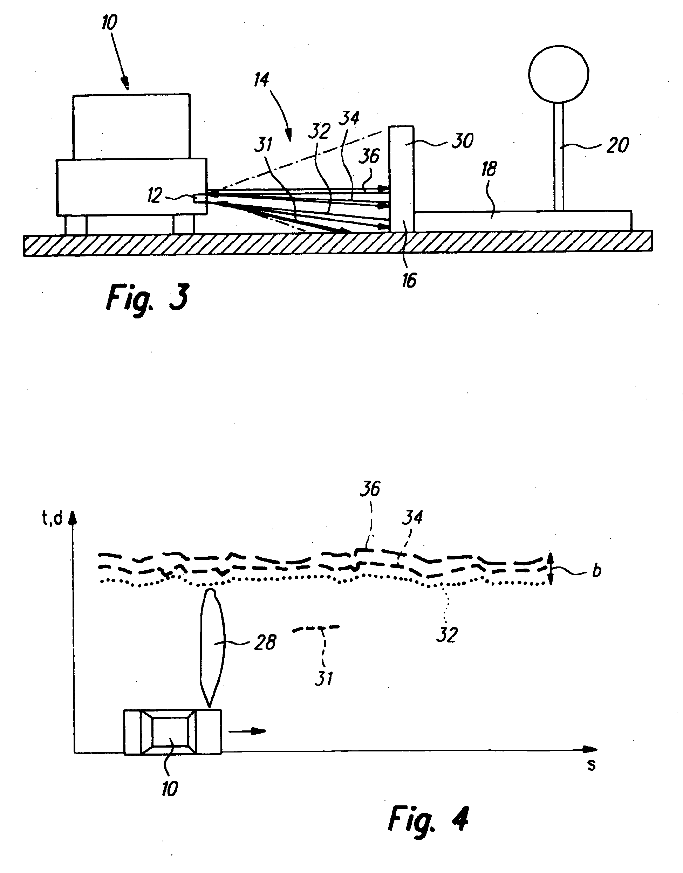

Die Figur 3 unterscheidet sich von der Figur 1 dadurch, dass im Bereich des Randsteins 16 eine sich in vertikaler Richtung erstreckende Wand 30 vorhanden ist.

Entsprechend der Figur 1 sind in der Figur 3 beispielhaft drei Echosignale 32, 34, 36 dargestellt, die innerhalb eines Messfensters gesammelt werden. Zusätzlich zu den wegen der Längserstreckung der Wand über die Länge der Parklücke auftretenden Echosignale 32, 34, 36 kann der Fall auftreten, dass kurzeitig ein weiteres Echosignal 31 auftritt, dass am Straßenbelag reflektiert wird. Dieses Signal tritt aber nicht über die Parklückelänge sondern nur als lokales Störsignal auf, was in der Fig. 4 angedeutet ist. Derartige lokal auftretende Signale können ausgeblendet werden und finden dann beim erfindungsgemäßen Verfahren keine Berücksichtigung.

Die aus den Echosignalen 32, 34, 36 resultierende Streubreite b gemäß Figur 4 ist vergleichsweise gering, da die Laufzeiten der Echosignale 32, 34, 36 aufgrund des Vorhandenseins der parallel zur Längsachse der Parklücke 14 verlaufenden Wand nahezu gleich sind. Aufgrund der geringen Streubreite b, die bei einer zeitlichen Betrachtung unter 3,2 msec und bei einer räumlichen Betrachtung unterhalb von 50 cm liegt, kann die Tiefenbegrenzung der Parklücke 14 durch die Mauer erkannt werden. Die Mauer 30 erstreckt sich dabei über die gesamte vom Fahrzeug längspassierte Parklücke 14, was aus den in der Figur 4 nahezu auf einer Linie liegenden Signalen 32, 34, 36 entnommen werden kann.

Gemäß der Erfindung kann folglich qualitativ unterschieden werden, ob eine den Einparkvorgang behindernde Tiefenbegrenzung einer Parklücke vorhanden ist. Ist eine derartige Tiefenbegrenzung vorhanden, kann der Parkvorgang derart ausgeführt werden, dass der Bug und/oder das Heck des Fahrzeugs nicht über den Bordstein ragt, so dass es zu keiner Kollision des Fahrzeugs mit dem erkannten Gegenstand kommt.

Die Erfindung hat dabei den Vorteil, dass keine zusätzlichen Sensoren und/oder keine zusätzliche Mechanik für den Sensor 12 vorzusehen ist. Allein aufgrund der Signalverarbeitung, sprich einer entsprechenden Software, kann festgestellt werden, ob eine Tiefenbegrenzung vorhanden ist oder nicht.

## Patentansprüche

1. Verfahren zur Ermittelung der Tiefenbegrenzung einer Parklücke (14) mittels wenigstens einem Ultraschallsensor (12) eines Fahrzeugs (10), wobei beim Längspassieren der Parklücke (14) folgende Schritte durchgeführt werden:
a) Aussenden einer Ultraschallwelle,
b) Sammeln von Echosignalen (22, 24, 26; 32, 34, 36) der ausgesendeten Ultraschallwelle innerhalb eines Messfensters,
c) Bestimmen der Streuung und/oder der Verteilung der Echosignale innerhalb der Streuung,
wobei die Streuung der Echosignale und deren Verteilung im Hinblick auf die Laufzeiten der Echosignale und/oder im Hinblick auf die räumlichen Abstände der die Echosignale reflektierenden Objekte betrachtet wird,
**gekennzeichnet durch**
d) Feststellen einer Tiefenbegrenzung wenn die Streubreite (b) aller und/oder mehrerer, innerhalb der Verteilung eine Konzentration bildender Laufzeiten und/oder Abstände unterhalb eines vorgebbaren Schwellwertes liegt.

2. Verfahren nach Anspruch 1, **dadurch gekennzeichnet, dass** der Schwellwert im Hinblick auf die Laufzeiten der Echosignale 4 msec oder 3,2 msec oder 2 msec beträgt.

3. Verfahren nach Anspruch 1 oder 2, **dadurch gekennzeichnet, dass** der Schwellwert im Hinblick auf die räumlichen Abstände der die Echosignale reflektierenden Objekte 65 cm oder 50 cm oder 30 cm beträgt.

4. Verfahren nach einem der vorhergehenden Ansprüche, **dadurch gekennzeichnet, dass** in einem Messfenster 3-mal bis 20-mal, und insbesondere 4-mal bis 8-mal Echosignale einer ausgesendeten Ultraschallwelle gesammelt werden.

5. Verfahren nach einem der vorhergehenden Ansprüche, **dadurch gekennzeichnet, dass** beim Passieren der Parklücke die Streubreite zur Bestimmung der Tiefenbegrenzung über die gesamte Parklückenlänge oder über einen Abschnitt der Parklückenlänge betrachtet wird.

6. Verfahren nach einem der vorhergehenden Ansprüche, **dadurch gekennzeichnet, dass** die Ultraschallwelle im wesentlichen kegelartig ausgesandt wird mit einen Kegelachswinkel (α) von 10 bis 30°, insbesondere von etwa 20°.

7. System zur Bestimmung der Tiefenbegrenzung einer Parklücke, arbeitend nach dem Verfahren nach wenigstens einem der vorhergehenden Ansprüche, umfassend wenigstens einen Ultraschallsensor (12) und eine Signalverarbeitung.

## Claims

1. Method for determining the depth limitation of a parking space (14) using at least one ultrasonic sensor (12) of a vehicle (10), the following steps being carried out when the parking space (14) is passed in the longitudinal direction:
a) an ultrasonic wave is emitted,
b) echo signals (22, 24, 26; 32, 34, 36) of the emitted ultrasonic wave are collected within a measuring window,
c) the scatter and/or the distribution of the echo signals within the scatter is/are determined,
the scatter of the echo signals and their distribution being taken into account witch respect to the propagation times of the echo signals and/or with respect to the spatial distances between the objects which reflect the echo signals,
**characterised by**
d) determination of a depth limitation if the scatter width (b) of all and/or a plurality of propagation times and/or distances, which form a concentration within the distribution, is below a predefinable threshold value.

2. Method according to Claim 1, **characterized in that** the threshold value with respect to the propagation times of the echo signals is 4 msec or 3.2 msec or 2 msec.

3. Method according to Claim 1 or 2, **characterised in that** the threshold value with respect to the spatial distances between the objects which reflect the echo signals is 65 cm or 50 cm or 30 cm.

4. Method according to one of the preceding claims, **characterized in that** echo signals of an emitted ultrasonic wave are collected 3 times to 20 times and, in particular, 4 times to 8 times in a measuring window.

5. Method according to one of the preceding claims, **characterized in that**, when the parking space is passed, the scatter width is taken into account in order to determine the depth limitation over the entire parking space length or over a section of the parking space length.

6. Method according to one of the preceding claims, **characterized in that** the ultrasonic wave is emitted in a substantially cone-like manner with a cone axial angle (α) of 10 to 3°, in particular approximately 20°.

7. System for determining the depth limitation of a parking space, operating according to the method according to at least one of the preceding claims, comprising at least one ultrasonic sensor (12) and a signal processing means.

## Revendications

1. Procédé pour déterminer la limitation en profondeur d'un emplacement de stationnement (14) à l'aide d'au moins un capteur à ultrasons (12) d'un véhicule (10), les étapes suivantes étant exécutées lors du passage longitudinal à côté de l'emplacement de stationnement (14) ;
a) émission d'une onde ultrasonique,
b) collecte de signaux d'écho (22, 24, 26 ; 32, 34, 36) de l'onde ultrasonique émise à l'intérieur d'un créneau de mesure,
c) détermination de la dispersion et/ou de la distribution des signaux d'écho à l'intérieur de la dispersion,
la dispersion des signaux d'écho et leur distribution étant observées en considération des temps de propagation des signaux d'écho et/ou en considération des écarts dans l'espace entre les objets réfléchissant les signaux d'écho,
**caractérisé par**
d) la détermination d'une limitation en profondeur lorsque la largeur de dispersion (b) de tous et/ou de plusieurs temps de propagation et/ou écarts formant une concentration au sein de la distribution est inférieure à une valeur de seuil à prédéfinir.

2. Procédé selon la revendication 1, **caractérisé en ce que** la valeur de seuil relative aux temps de propagation des signaux d'écho est de 4 mis, de 3,2 ms ou de 2 ms.

3. Procédé selon la revendication 1 ou 2, **caractérisé en ce que** la valeur de seuil relative aux écarts dans l'espace des objets réfléchissant les signaux d'écho est de 65 cm, de 50 cm ou de 30 cm.

4. Procédé selon l'une des revendications précédentes, **caractérisé en ce que** les signaux d'écho d'une onde ultrasonique émise sont collectés de 3 à 20 fois dans un créneau de mesure, et notamment de 4 à 8 fois.

5. Procédé selon l'une des revendications précédentes, **caractérisé en ce que** lors du passage à côté de l'emplacement de stationnement, la largeur de dispersion est prise en compte pour déterminer la limitation en profondeur sur toute la longueur de l'emplacement de stationnement ou sur une portion de l'emplacement de stationnement.

6. Procédé selon l'une des revendications précédentes, **caractérisé en ce que** l'onde ultrasonique est pour l'essentiel émise à la manière d'un cône et avec un angle de l'axe du cône (α) de 10 à 30°, notamment de 20° environ.

7. Système pour déterminer la limitation en profondeur d'un emplacement de stationnement, fonctionnant selon le procédé selon au moins l'une des revendications précédentes, comprenant au moins un capteur à ultrasons (12) et un dispositif de traitement de signal.
